# EUROPEAN PATENT APPLICATION

(11) **EP 0 620 608 A1**
(43) Date of publication of application: **19.10.1994**
(21) Application number: 94105730.9
(22) Date of filing: 13.04.1994
(51) Int. Cl.: H01M 8/02

(54) **Solid oxide fuel cell and manufacturing process thereof**

(30) Priority: 13.04.1993 JP 86201/93
(71) Applicant: MURATA MANUFACTURING CO., LTD., Nagaokakyo-shi,Kyoto (JP)
(72) Inventor: Kobayashi, Shozo, c/o Murata Manuf. Co., Ltd., Nagaokakyo-shi, Kyoto (JP); Taira, Hiroaki, c/o Murata Manuf. Co., Ltd., Nagaokakyo-shi, Kyoto (JP); Sakamoto, Sadaaki, c/o Murata Manuf. Co., Ltd., Nagaokakyo-shi, Kyoto (JP); Shiratori, Akira, c/o Murata Manuf. Co., Ltd., Nagaokakyo-shi, Kyoto (JP); Tomono, Kunisaburo, c/o Murata Manuf. Co., Ltd., Nagaokakyo-shi, Kyoto (JP); Takagi, Hiroshi, c/o Murata Manuf. Co., Ltd., Nagaokakyo-shi, Kyoto (JP)
(74) Representative: Schoppe, Fritz, Dipl.-Ing.

(57) **Abstract**

A solid oxide fuel cell of a structure wherein cells, each of which is composed of a solid electrolyte (2), a cathode (3) and an anode (4) disposed on either side of the solid electrolyte, and separators (10) are alternately laminated. A sealant (20), which is made of a mixture of ceramic fiber and glass, is inserted between each cell and the adjacent separator.

## Description

### [Technical Field]

The present invention relates to a solid oxide fuel cell and a manufacturing process thereof.

### [Background Art]

There has been conventionally suggested a type of solid oxide fuel cell which is of a structure wherein cells, each of which is composed of a solid electrolyte, an anode provided on one side of the solid electrolyte and a cathode provided on the other side of the solid electrolyte, and separators for isolating a fuel gas and an oxide gas are laminated alternately. The cells and the separators must be joined in such a manner not to cause leakage of a fuel gas and/or an oxide gas. The temperature wherein the solid oxide fuel cell is operated is very high (about 1000°C), compared with the temperature wherein the solid oxide fuel cell is not operated (room temperature), and the coefficient of thermal expansion of the cells and that of the separators are different. Thereby, while the solid oxide fuel cell is operated and stopped repeatedly, the cells will be broken by thermal stress.

In the light of these problems, an edge melt-sealing method has been suggested. In the edge melt-sealing method, a non-conductive viscous material, such as, Pyrex (trade name) is coated on the surface of the solid oxide fuel cell at each joining portion between a separator and the adjacent cell. Even adopting this method, however, if the joint between the separator and the cell is not sufficiently firm, leakage of a gas will occur during operation of the solid oxide fuel cell.

### [Disclosure of the Invention]

An object of the present invention is to provide a solid oxide fuel cell wherein leakage of a gas does not occur and repetitions of operation and stoppage of the solid oxide fuel cell does not cause breakage of cells, and a manufacturing process thereof.

In order to attain the object, a solid oxide fuel cell comprises cells, each of which has a solid electrolyte, an anode disposed on a first side of the solid electrolyte and a cathode disposed on a second side of the solid electrolyte, and separators which are alternately laminated, and a sealant, which is made of a mixture of ceramic fiber and glass, is inserted between each cell and the adjacent separator.

In the structure, the ceramic fiber contained in the sealant has flexibility and eases thermal stress caused by the difference between the separators and the cells in the coefficient of thermal expansion. Also, the sealing under a high temperature is guaranteed by the glass contained in the sealant.

### [Brief Description of the Drawings]

This and other objects and features of the present invention will be apparent from the following description with reference to the accompanying drawings, in which:
Fig. 1 is an exploded perspective view of a solid oxide fuel cell according to the present invention; and
Fig. 2 is a sectional view of the solid oxide fuel cell, taken along a line II-II shown in Fig. 1.

### [Best Mode for Carrying out the Invention]

An embodiment of the present invention is hereinafter described with reference to the accompanying drawings.

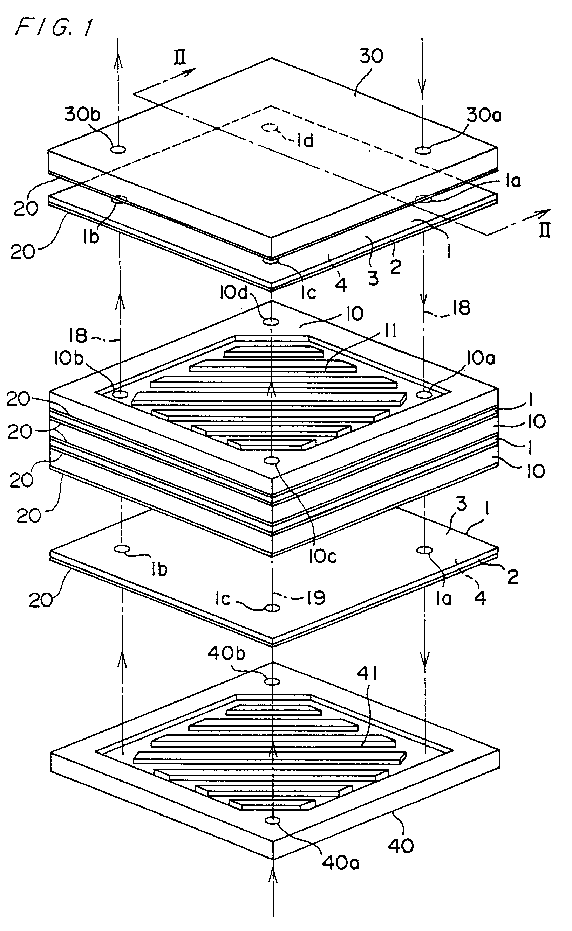

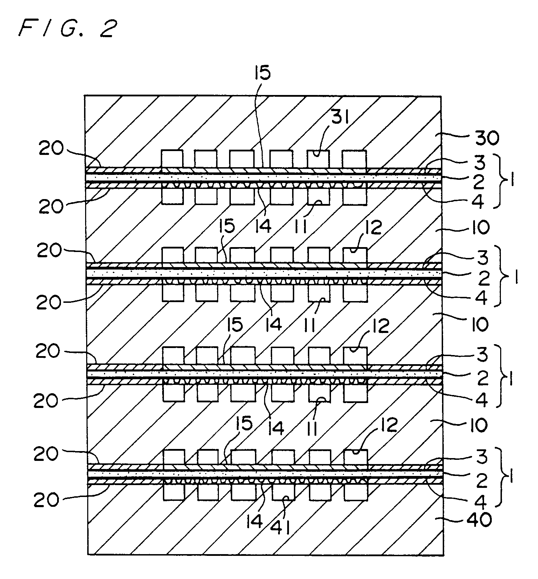

Fig. 1 and Fig. 2 show a solid oxide fuel cell according to the present invention. A cell 1 is rectangular, and a fuel gas supply hole 1a and a fuel gas exhaust hole 1b, which are part of a fuel gas passage, and an oxide gas supply hole 1c and an oxide gas exhaust hole 1d, which are part of an oxide gas passage, are made at the four corners respectively. The cell 1 consists of a solid electrolyte 2, a cathode 3 disposed on an upper side of the solid electrolyte 2, and an anode 4 disposed on a lower side of the solid electrolyte 2. The solid electrolyte 2 is made of, for example, yttrium stabilized zirconia. The anode 4 is made of, for example, a cermet whose main constituents are nickel and zirconia. The cathode 3 is made of, for example, a perovskite oxide such as (La,Sr)MnO₃.

Cells 1 of the above structure and intermediate separators 10 are laminated alternately. In order to efficiently collect charge occurring on the cathode 3 and the anode 4 of each cell 1, a conductive porous sheet 15 made of (La,Sr)MnO₃ is inserted between the cathode 3 and the adjacent intermediate separator 10 in the center portion, and a nickel mesh 14 is inserted between the anode 4 and the adjacent intermediate separator 10 in the center portion (see Fig. 2). The conductive porous sheets 15 and the nickel meshes 14 are slightly smaller than the cells 1.

Each intermediate separator 10 has grooves 11 on the upper side at uniform intervals so as to distribute a fuel gas 18 entirely and evenly on the adjacent anode 4, and has grooves 12 on the lower side at uniform intervals so as to distribute an oxide gas 19 entirely and evenly on the adjacent cathode 3. The grooves 11 and the grooves 12 extend in mutually perpendicular directions. Further, each intermediate separator 10 has, at its four corners, a fuel gas supply hole 10a, a fuel gas exhaust hole 10b, an oxide gas supply hole 10c and an oxide gas exhaust hole 10d respectively.

The laminate of cells 1 and intermediate separators 10 is further provided with an upper separator 30 and a lower separator 40. In order to efficiently collect charge occurring on the cathode 3 of the uppermost cell 1 and on the anode 4 of the lowermost cell 1, a conductive porous sheet 15 made of (La,Sr)MnO₃ is inserted between the cathode 3 and the upper separator 30 in the center portion, and a nickel mesh 14 is inserted between the anode 4 and the lower separator 40 in the center portion (see Fig. 2).

The upper separator 30 has grooves 31 on the lower side at uniform intervals so as to distribute the oxide gas 19 entirely and evenly on the adjacent cathode 3. The upper separator 30 further has a fuel gas supply hole 30a and a fuel gas exhaust hole 30b at mutually opposite corners respectively.

The lower separator 40 has grooves 41 on the upper side at uniform intervals so as to distribute the fuel gas 18 entirely and evenly on the adjacent anode 4. The lower separator 40 further has an oxide gas supply hole 40a and an oxide gas exhaust hole 40b at mutually opposite corners respectively. The intermediate separators 10, the upper separator 30 and the lower separator 40 are made of a material whose main constituents are nickel and chromium which are oxidation-resistant even under a high temperature. In this embodiment, Inconel 600 (trade name) which contains nickel at 74 percent by weight, chromium at 15 percent by weight and iron at 8 percent by weight is used as the material of the separators 10, 30 and 40. The separators 10, 30 and 40 isolate the fuel gas 18 and the oxide gas 19 from each other.

As shown in Fig. 2, a sealant 20 is inserted among the cells 1, the intermediate separators 10, the upper separator 30 and the lower separator 40 at the edge portion in such a manner as to enclose the nickel meshes 14 and the conductive porous sheets 15. The sealant 20 isolates the fuel gas 18 and the oxide gas 19 from the outside air. The sealant 20 is a mixture of ceramic fiber and glass. In this embodiment, the sealant 20 is prepared as follows. Aluminasilica bulk fiber and borosilicate glass are mixed, and an organic binder is added so as to change the mixture into a slurry state. Then, the slurry is made into sheets by doctor-blade method.

The above-described elements 1, 10, 14, 15, 20, 30 and 40 are joined together, and a solid oxide fuel cell is produced. While the solid oxide fuel cell is kept under a temperature of 1000°C , the fuel gas 18 and the oxide gas 19 are supplied to the solid oxide fuel cell through the fuel gas supply hole 30a made in the upper separator 30 and the oxide gas supply hole 40a made in the lower separator 40 respectively. The fuel gas 18 and the oxide gas 19 are distributed to the anodes 4 and the cathodes 3 respectively along the grooves 11, 12, 31 and 41. Thereby, in each cell 1, an electrode reaction occurs via the solid electrolyte 2, which causes a voltage. The fuel gas 18, after the reaction, is exhausted through the fuel gas exhaust hole 30b made in the upper separator 30, and likewise, the oxide gas 19, after the reaction, is exhausted through the oxide gas hole 40b made in the lower separator 40. This solid oxide fuel cell was subjected to a voltage test. While the circuit of the solid oxide fuel cell was open, excessively humidified hydrogen gas and air being used as the fuel gas 18 and the oxide gas 19 respectively, the occurring voltage was measured. In result, the voltage occurring in a single cell 1 was 1.02V, which is in conformity with theory.

The solid oxide fuel cell was also subjected to a temperature cycle test. After the temperature of the solid oxide fuel cell was changed between the room temperature (25°C) and the operation temperature (1000°C) at a raising/falling speed of 200°C/hour repeatedly 30 times, while the circuit of the solid oxide fuel cell was open, the occurring voltage was measured. In result, the voltage was measured to be substantially equal to that before the 30 cycles of temperature change. Additionally, the cells 1 were not broken after the 30 cycles of temperature change.

The followings can be inferred from the result: the ceramic fiber contained in the sealant 20 which is disposed between each cell 1 and the adjacent separator 10, 30 or 40 eases thermal stress caused by the difference between the cells 1 and the separators 10, 30 and 40 in the coefficient of thermal expansion; and meanwhile, the glass contained in the sealant 20 maintains the sealing performance of the solid oxide fuel cell even under the high operation temperature. Thus, even if the cells 1 and the separators 10, 30 and 40 are laminated with slight misalignment, the sealing performance of the solid oxide fuel cell can be stably maintained during the operation, and even after repetitions of operation and stoppage, thermal stress can be absorbed.

Further, the sealant 20 may be made of ceramic paper impregnated with glass.

Although the present invention has been described in connection with the preferred embodiment above, it is to be noted that various changes and modifications are possible to those who are skilled in the art. Such changes and modifications are to be understood as being within the scope of the invention.

## Claims

1. A solid oxide fuel cell comprising:
a cell having a solid electrolyte, an anode which is disposed on a first side of the solid electrolyte, and a cathode which is disposed on a second side of the solid electrolyte;
separators for isolating a fuel gas and an oxide gas, the separators being laid respectively on the first side and on the second side of the cell; and
a sealant which is inserted among the cell and the separators, the sealant being made of a mixture of ceramic fiber and glass.

2. A solid oxide fuel cell as claimed in claim 1, wherein the sealant is made of a mixture of alumina-silica bulk fiber and borosilicate glass.

3. A solid oxide fuel cell as claimed in claim 1, wherein the sealant is made of ceramic paper impregnated with glass.

4. A solid oxide fuel cell as claimed in claim 1, wherein the sealant is disposed among the cell and the separators at an edge portion.

5. A solid oxide fuel cell as claimed in claim 1, wherein:
the solid electrolyte is made of yttrium stabilized zirconia;
the anode is made of nickel and zirconia;
the cathode is made of lanthanum strontium manganite; and
the separators are made of a material whose main constituents are nickel and chromium.

6. A solid oxide fuel cell as claimed in claim 1, wherein each of the separators has a plurality of grooves to distribute a gas to the anode or the cathode entirely and evenly.

7. A solid oxide fuel cell as claimed in claim 4, further comprising:
a conductive porous sheet which is made of lanthanum strontium manganite and is inserted between the cathode and the adjacent separator in a center portion; and
a nickel mesh which is inserted between the anode and the adjacent separator in a center portion.

8. A method of producing a solid oxide fuel cell, the method comprising the step of:
making sealant sheets by
preparing slurry of ceramic fiber and glass by adding an organic binder to a mixture of ceramic fiber and glass, and
making the slurry into sheets by doctor-blade method.
